# EUROPÄISCHE PATENTSCHRIFT

(11) **EP 0 858 518 B1**
(45) Veröffentlichungstag und Bekanntmachung des Hinweises auf die Patenterteilung: **09.02.2000**
(21) Anmeldenummer: 96937296.0
(22) Anmeldetag: 30.10.1996
(51) Int. Cl.: C23C 4/08, C23C 4/02, C23C 4/18

(54) **VERFAHREN ZUM HERSTELLEN EINER GLEITFLÄCHE AUF EINER LEICHTMETALLEGIERUNG**
METHOD OF PRODUCING A SLIDE SURFACE ON A LIGHT METAL ALLOY
PROCEDE DE PRODUCTION D'UNE SURFACE DE FROTTEMENT SUR UN ALLIAGE DES METAUX LEGERS

(30) Priorität: 31.10.1995 DE 19540572; 31.10.1995 DE 19549403; 12.09.1996 DE 19637041
(43) Veröffentlichungstag der Anmeldung: 19.08.1998
(73) Patentinhaber: Volkswagen Aktiengesellschaft, 38436 Wolfsburg (DE)
(72) Erfinder: KLOFT, Manfred, D-38154 Rhode (DE); STRICH, Reinhard, D-38118 Braunschweig (DE); SCHLEGEL, Udo, D-38159 Vechelde (DE)
(86) Internationale Anmeldenummer: EP9604716
(87) Internationale Veröffentlichungsnummer: WO9716577

(56) Entgegenhaltungen:
- DE-A- 2 433 814
- US-A- 5 080 056
- DATABASE WPI Section Ch, Week 8428 Derwent Publications Ltd., London, GB; Class M13, AN 84-173116 XP002025366 & JP 59 093 865 A (TOYOTA MOTOR KK) , 30.Mai 1984
- DATABASE WPI Section Ch, Week 9342 Derwent Publications Ltd., London, GB; Class M13, AN 93-334588 XP002025367 & SU 1 767 010 A (KARPENKO PHYS MECH INST) , 7.Oktober 1992
- DATABASE WPI Section Ch, Week 7821 Derwent Publications Ltd., London, GB; Class M13, AN 78-37705A XP002025368 & JP 53 041 621 A (HONDA MOTOR IND KK) , 15.April 1978
- STEEL IN THE USSR, Bd. 17, Nr. 3, 1987, LONDON, Seiten 148-150, XP002025365 LEVCHENKO: "Structure and properties of arc sprayed, steel-molybdenum coatings"

## Beschreibung

Die Erfindung betrifft ein Verfahren gemäß dem Oberbegriff des Patentanspruches 1.

Die Erfindung betrifft weiter eine Hubkolbenmaschine, insbesondere eine Verbrennungskraftmaschine, gemäß des Patentanspruchs 11.

Aus der SU-A-1 767 010 ist eine eisen-molybdän-chromhaltige Legierung bekannt die als reibungs- und korrosionsbeständigen Beschichtung durch Plasmabeschichtung aufgetragen werden kann. Solche Legierungen zeigen nur auf wenigen Substraten eine hohe Haftfestigkeit.

Die JP-A-59 093 865 beschreibt hoch-C-haltige Eisen-Chrom-Legierungen mit hoher Vickershärte, die in einer Mischung mit Molybdän und weiteren Legierungen durch Plasmabeschichtung aufgetragen werden kann. Diese Beschichtung eignet sich insbesondere für Reibungsflächen. Die zum Einsatz kommende Stahllegierung weist eine Vickershärte von 830 bis 1000 auf, die einen hohen eigenen Verschleißschutz bewirkt, je nach verwendetem Substrat oder Reibpartner jedoch Defizite zeigen kann. Geeignet sind solche Plasmaschichten im wesentlichen nur für von Natur aus sehr harte Substrate, wie beispielsweise Kolbenringe.

Aus der JP-A-53 041 621 ist eine plasmaverspritzbare Mischung aus Molybdän und reduziertem Eisenpulver bekannt. Bei der Verwendung von reduziertem Eisen anstatt Stahl wird erreicht, daß die enthaltene Beschichtung keine Oxidanschlüsse aufweist, da der vorliegende Kohlenstoff weder als Karbid noch gelöst vorliegt, und damit die Oxidbildung verhindert. Solche Mischungen sind zwar zum Auftrag auf Aluminiumsubstrate geeignet, das Verschleißverhalten gegenüber harten Reibungspartnern wie Kolbenringen ist jedoch verbesserungsfähig.

Aus der DE-A-24 33 814 ist ein Pulvergemisch mit Molybdän als Hauptbestandteil und kleineren bis mittleren Anteilen diverser Übergangselemente bekannt. Auch dieses Gemisch ist zur Plasmabeschichtung im Verbrennungsmotorenbereich einsetzbar, hinsichtlich ihres Verschleißverhaltens sind jedoch auch diese Schichten deutlich verbesserungsfähig.

In Steel in the USSR, Bd.17, Nr. 3, 1987, London, Seiten 148 bis 150 wird eine Stahl-Molybdänbeschichtung für Kolbenringe beschrieben. Die Beschichtung wird verhältnismäßig dick aufgetragen und erreicht günstig hohe Vickershärten. Zum Einsatz kommt hierbei ein karbithaltiges Gußeisen mit einem verhältnismäßig hohen Kohlenstoffgehalt, der die relativ hohe Härte bedingt. Gußeisenstähle bereiten jedoch wegen ihres verhältnismäßig hohen Kohlenstoffgehaltes beim Plasmaspritzen Schwierigkeiten, da durch das Aufschmelzen des Gußeisenstahls völlig neue Gefüge entstehen können und somit das Abschätzen der Stahlqualität in der resultierenden Beschichtung schwierig ist.

Aus der DE-44 40 713 A1 ist ein Verfahren zum Herstellen von Gleitflächen auf Gußeisenteilen bekannt, welches in mehreren Verfahrensschritten Schmiertaschen in der Gleitfläche offenlegt, welche im Betrieb eine hydrodynamische Schmierung gewährleisten sollen. Die Verfahrensschritte umfassen dabei ein mechanisches Bearbeiten der betreffenden Flächen, anschließend ein Bearbeiten mit einer chemisch und elektrochemisch inaktiven Flüssigkeit unter einem zur Flitterentfernung geeigneten Druck. Durch die Kombination der Verfahrensschritte Flüssigkeitsstrahlen und Reibplattieren werden in der betreffenden Oberfläche die Schmiertaschen freigelegt, welche in ihrer Gesamtheit ein die erforderliche hydrodynamische Schmierung gewährleistendes Microdruckkammersystem bilden. Die Materialausbrüche werden dadurch erzielt, daß durch eine Honbearbeitung Titan-Karbide und Titan-Nitride aus der Oberfläche herausgerissen werden, wobei die so entstehenden Krater durch die weitere Bearbeitung wieder zugeschmiert werden. Das anschließende Flüssigkeitsstrahlen und Reibplattieren legt diese Vertiefungen wieder frei.

Grundsätzlich ist es aus der US-A-5,080,056 bekannt, auf aus einer Magnesiumlegierung bestehende Werkstücke durch Hochgeschwindigkeits-Flammspritzen eine im wesentlichen porenfreie Aluminium-Bronze-Legierung aufzubringen, deren Schichtdicke von ca. 1 mm anschließend durch Honen auf ein Endmaß von ca. 127 µm bearbeitet wird.

Es ist bereits bekannt, im Gegensatz zu einem Microdruckkammersystem ein kommunizierendes System, beispielsweise auf Zylinderlaufbahnen von Brennkraftmaschinen, durch eine Honbearbeitung zu erzielen. Hierbei entstehen sich kreuzende Riefen, welche durch die Kreuzungsbereiche miteinander verbunden sind und insgesamt ein offenes System darstellen. Nachteilig hierbei ist es, daß das auf der Gleitfläche gleitende Werkstück, beispielsweise ein Kolbenring eines Kolbens einer Brennkraftmaschine, das in den Riefen befindliche Öl vor sich her schiebt, wodurch nur ein eingeschränkter hydrodynamischer Öldruck aufgebaut werden kann. Infolgedessen kommt es an den Riefenkanten zu einer Mischreibung zwischen den beteiligten Gleitpartnern. Die bei Grauguß-Werkstücken weitverbreiteten Mischreibungs-Schmierungssysteme sind bei Werkstücken, die aus Gewichtsgründen aus einer Magnesiumlegierung bestehen sollen, nicht anwendbar.

Aus der US-A 2,588,422 ist ein Aluminiummotorblock bekannt, dessen Zylinderlaufbahnen eine thermisch gespritzte Beschichtung aufweisen. Diese Beschichtung ist auf der unbehandelten Motorblockoberfläche zweischichtig aufgebaut aus einer stählernen Gleitschicht von ca. 1 mm Dicke und einer molybdänhaltigen Zwischenschicht von ca. 50 µm Dicke. Die Zwischenschicht, die zu mindestens 60 % Molybdän enthält, dient nicht als Gleitschicht sondern ist notwendig, um die harte Gleitschicht mit dem Aluminiumblock zu verbinden. Bevorzugt ist diese Verbindungsschicht aus reinem Molybdän aufgebaut. Die Gleitschicht ist eine harte Metallschicht, wie beispielsweise Carbonstahl, Bronze oder rostfreier Stahl, wobei der Stahl legiert sein kann mit beispielsweise Nickel, Chrom, Vanadium oder Molybdän. Grundsätzlich wird mit diesem Schichtaufbau eine gute Gleitschicht zur Verfügung gestellt, wobei jedoch der Aufwand der Doppelbeschichtung erheblich ist.

Aus der GB 2 050 434 A sind verschiedene durch thermisches Spritzen erhaltene Beschichtungen von 0,5 bis 2,5 mm Dicke bekannt. Diese Beschichtungen befinden sich auf Stahl oder Gußteilen von Brennkraftmaschinen, wie beispielsweise Kolbenringen oder Zylinderlaufbüchsen. Hierbei wird festgestellt, daß Beschichtungen, die aus gleichen Teilen Molybdänpulver und Carbonstahlpulver bestehen, auf den genannten Materialien erheblich weniger abriebsbeständig sind als Beschichtungen, die nur 0,5 bis 4,5 Gew.-% Molybdän neben 20 bis 97 Gew.-% Metallcarbiden und ggf. Eisen oder eisenhaltiger Legierung enthalten. Für eine Verbindung dieser Beschichtungen auf Magnesiumlegierungen muß auf die vorgenannte US-A 2,588,422 zurückgegriffen werden.

Die GB-PS 1 478 287 beschreibt eine Pulvermischung zur Plasmabeschichtung von Stahl- oder Gußteilen in einer Dicke von ca. 762 - 1270 µm, wie beispielsweise Kolbenringen, Zylinderblöcken oder Zylinderlaufbüchsen. Das Pulver ist eine Mischung aus Molybdän, Bor und Gußeisen, wobei mindestens soviel Gußeisen wie Molybdän enthalten ist; das Bor liegt üblicherweise bis 3 % der Summe aus Molybdän und Gußeisen vor. Solche Beschichtungen entsprechen, wie das Beispiel 1 aus der GB 2 050 434 A zeigt, nicht mehr den heutigen Qualitätsanforderungen.

Eine weitere Beschichtung für Zylinderlaufbüchsen ist aus der DE-AS 21 46 153 bekannt, in der eine Plasmabeschichtung, die neben mindestens 65 Gew.-% Molybdän noch Nickel und Chrom, Bor, Silicium und ggf. noch Eisen enthält, beschrieben ist. Diese Beschichtung von Zylinderlaufbüchsen, die aus Graugußeisen gefertigt sind, weist sehr kleine Poren von 0,1 - 2 µm und eine Gesamtporosität von 15 % auf und entspricht den zuvor beschriebenen Beschichtungen aus den britischen Schriften.

Wie oben beschrieben, sind für Aluminiumlegierungen diverse Plasmabeschichtungen bekannt. Eine Übertragbarkeit dieser Beschichtungen auf Magnesiumlegierungen ist jedoch grundsätzlich nicht möglich, da Magnesiumlegierungen einen Wärmeausdehnungskoeffizienten haben, der ca. ¹/₃ größer ist, als der von Aluminiumlegierungen. Entsprechend verhalten sich die Wärmeausdehnungskoeffizienten von Plasmabeschichtungen zu Magnesiumlegierungen wie ca. 1 : 3, so daß starke Belastungen zwischen der Plasmaspritzschicht und der Magnesiumlegierung zu erwarten sind.

Aufgabe der Erfindung ist es, ein Verfahren zur Herstellung einer Gleitfläche auf einer Magnesiumlegierung oder Aluminiumlegierung zur Verfügung zu stellen, das mit einem einzigen Beschichtungsvorgang auskommt. Aufgabe der Erfindung ist femer eine entsprechende Hubkolbenmaschine mit einem Motorblock aus einer Magnesiumlegierung oder Aluminiumlegierung.

Die Lösung dieser Aufgabe gelingt mit den Maßnahmen des Patentanspruches 1.

Vorteilhafte Ausgestaltung des Verfahrens sind in den abhängigen Ansprüchen angegeben.

Die Merkmale des Patentanspruchs 11 lösen die Aufgabe hinsichtlich der Hubkolbenmaschine.

Magnesiumlegierungen enthalten üblicherweise mindestens 20Gew.-% Magnesium und insbesondere Magnesium als den Hauptbestandteil der Legierung. Entsprechendes gilt auch für Aluminiumlegierungen.

Die erfindungsgemäßen Beschichtungen erreichen gute Haftfestigkeiten auf den Leichtmetallegierungen, obwohl die Magnesiumlegierung einen Wärmeausdehnungskoeffizienten von ca. 27 · 10⁻⁶K⁻¹, die Aluminiumlegierung einen solchen von ca. 21 · 10⁻⁶K⁻¹ und die Beschichtung einen solchen von ca. 10 · 10⁻⁶K⁻¹ hat. Es hat sich gezeigt, daß bei solchen molybdänhaltigen Beschichtungen eine gewisse Rauhigkeit der Leichtmetallegierungsoberfläche ausreichend ist, um eine gute Haftfestigkeit zwischen der Leichtmetallegierung und der aufgebrachten Beschichtung zu erhalten. Für besonders gute Haftfestigkeiten ist es empfehlenswert, über Versuchsreihen für die jeweilige Leichtmetallegierung und molybdänhaltige Beschichtung die besten Rauigkeitstiefen für die Leichtmetallegierungsoberfläche zu ermitteln. Ebenso ist es vorteilhaft für gute Haftfestigkeiten die Spritzbedingungen in Versuchsreihen zu optimieren, wie es in der Plasmaspritztechnik üblich ist. So kann beispielsweise bei der Verwendung von Pulvern als Spritzmedium die Pulverpartikelgröße, allgemein das Verhältnis Molybdän zu Stahl und auch der Stahltyp variiert werden, wobei mit wenigen Versuchen bereits optimale Werte erreichbar sind.

Das erfindungsgemäße Verfahren stellt in vergleichsweise einfacher Weise ein Microdruckkammersystem bereit , indem auf ein Werkstück aus einer Leichtmetallegierung durch thermisches Spritzen (wie es in DIN 32530, Okt. 89, beschrieben ist) eine Verschleißschicht aufgebracht wird, welche anschließend unter Freilegung der Schmiertaschen des Microdruckkammersystems durch mechanisches Bearbeiten teilweise abgetragen wird. Hierdurch wird eine Gleitfläche auf dem Werkstück geschaffen, welche eine ausreichende Verschleißfestigkeit aufweist, welche die Leichtmetallegierung nicht bietet, wobei durch das thermische Spritzen und die anschließende mechanische Bearbeitung eine Vielzahl von Materialausbrüchen entsteht, welche während der mechanischen Bearbeitung nur zu einem geringen Teil zugeschmiert werden und in Folge dessen eine ausreichende Anzahl von das Microdruckkammersystem bildenden Vertiefungen bereitstellt.

Das Microdruckkammersystem auf der Gleitfläche entsteht somit in gänzlich anderer Art und Weise als in dem eingangs genannten Stand der Technik, welcher notwendigerweise auf das Vorhandensein von Titananteilen angewiesen ist.

In vorteilhafter Ausgestaltung der Erfindung wird die Verschleißschicht mittels Plasmaspritzen, insbesondere atmosphärisches Plasmaspritzen, aufgebracht. Durch gezielte Schichtausbrüche beim Honen kann in die Oberfläche der Beschichtung ein Microdruckkammersystem eingebracht werden.

Das in der US-A-5,080,056 vorgeschlagene Hochgeschwindigkeitsflammspritzen kann bei einer Vielzahl von Werkstücken, beispielsweise bei Zylinderlaufbahnen von Brennkraftmaschinen infolge der vergleichsweise hohen eingebrachten Energie nicht angewendet werden, da es zu Verzügen in den Zylinderlaufbahnen kommen kann.

Das erfindungsgemäße Verfahren vermeidet vorteilhafterweise jeglichen umweltbelastenden, galvanischen Verfahrensschritt. Bei Verwendung von geeigneten Spritzpulvern für das Plasmaspritzen sowie geeigneter Parameter für das Honen lassen sich extrem glatte Gleitflächen mit äußerst geringen Rauhtiefewerten schaffen, welche zur hydrodynamischen Schmierung das vorgenannte Microdruckkammersystem aufweisen.

Gemäß der vorliegenden Erfindung hat sich herausgestellt, daß eine Mischung aus Stahlpulver mit Molybdänpulver sich besonders gut für das thermische Spritzen zur Erzielung von Gleitflächen auf Magnesiumlegierungen eignet. Diese Mischung setzt sich zusammen aus 10 bis 70 % Molybdänpulver und 90 bis 30 % Stahlpulver, wobei 20 bis 50 % Molybdänpulver und 80 bis 50 % Stahlpulver besonders bevorzugt sind. Die Mischung kann ggf. noch um weitere Komponenten ergänzt werden, die vorteilhaft weniger als 50 Gew.-% der Gesamtmischung ausmachen. Als eine der günstigsten Mischung hat sich eine 50 : 50 Mischung herausgestellt. Auch wenn solche Mischungen im Stand der Technik auf gußeisernen Substraten zu mäßigen, d. h. nicht verschleißfesten Beschichtungen führen (vergl. insbesondere GB 2 050 434 A), so ist eine solche Beschichtung auf Leichtmetallegierung außerordentlich haftfest und in Verbindung mit dem Microdruckkammersystem abriebsfest. Man erhält somit erfindungsgemäß die Gleitfläche unmittelbar auf der auf der Leichtmetallegierung abgeschiedenen Schicht und benötigt keine Zwischenschicht, wie sie in der US 2,588,422 für Aluminium beschrieben ist. Das besondere an der vorliegenden Erfindung ist, daß auf dem verhältnismäßig weichen Untergrund einer Leichtmetallagierung eine verschleißfeste Schicht direkt haftend aufgetragen werden kann. Mit zur Erfindung gehört die Beschichtung von Leichtmetall-Motorblöcken einer Hubkolbenmaschine, wobei die Beschichtung sich des Verfahrens bedient.

Bei dem erfindungsgemäßen thermischen Spritzen wird vorzugsweise ein Plasmaspritzen eingesetzt, wobei die Mischung des zu verspritzenden Metalls insbesondere als Pulver zum Einsatz kommt. Da das Pulver während des Spritzens zumindest angeschmolzen auf die Oberfläche des Werkstückes geschleudert wird, ist für die Qualität des Arbeitsergebnisses das Einhalten einer bestimmten Partikelgröße (Verteilung) vorteilhaft. Die geeignete Partikelmorphologie wird zweckmäßigerweise mit dem zum Einsatz kommenden Plasmabrenner in Versuchsreihen ermittelt.

Zum Einsatz in der vorliegenden Erfindung haben sich übliche Stähle als besonders vorteilhaft herausgestellt, wobei die Eigenschaften des Stahls wieder in Versuchsreihen optimal angepaßt werden können. Bereits mit üblichen Stählen wird eine gute Haftung auf dem Leichtmetallsubstrat erreicht.

Weitere vorteilhafte Kriterien für die Herstellung der erfindungsgemäßen Gleitbeschichtung sind die Auftragsparameter und der Untergrund des Körpers. Als besonders vorteilhaft hat sich die Vorbehandlung der zu beschichtenden Substratoberfläche erwiesen, wobei das Aufrauhen vorteilhaft nicht durch Schleifen, sondern durch einen Partikel- oder Fluidstrom erfolgt. Das Aufrauhen von Oberflächen vor der Plasmabeschichtung ist grundsätzlich bekannt, wird aber insbesondere bei Leichtmetallsubstraten (Aluminiumlegierungen) oft zu Gunsten einer einfachen Oberflächenreinigung nicht durchgeführt.

Weitere erfindungsgemäße vorteilhafte Spritzparameter sind die Wahl der Porosität, insbesondere eingeschlossen des Oxidgehaltes, in der Beschichtung und die Herstellung überwiegend geschlossener (solitärer) Poren sowie ein vorteilhafter Porendurchmesserbereich. Gemäß des Stands der Technik werden Porositäten von praktisch porositätsfrei bis ca. 15 % beschrieben, wobei bei der Verwendung molybdänhaltiger Beschichtungen (auf Graugußsubstraten) Porositäten von etwa 15 % gespritzt wurden (DE-AS 21 46 153). Erfindungsgemäß wurde jedoch festgestellt, daß bei so hohen Porositäten es im Motorbetrieb zu einem hohen Ölverbrauch kommt. Grundsätzlich ist es vorteilhaft, wenn die Poren überwiegend geschlossen und in einem bestimmten Dickenbereich liegen. Auch dies unterscheidet die Erfindung vom letztgenannten Stand der Technik, in dem die Poren aufgrund ihres hohen Volumenanteils miteinander verbunden sind (offenporig) und in dem die Mehrzahl der Poren in einem Größenbereich von 0,1 bis 2 µm liegt. Solche Poren erwiesen sich für den erfindungsgemäßen Aufbau eines Mikrodruckkammersystems mit Molybdän/Stahl-Beschichtungen als wenig geeignet.

Prinzipiell sind Stahlbeschichtungen aus der GB 2 050 434 A in Verbindung mit Molybdän bekannt, wobei dort jedoch mit einer solchen Mischung auf Eisensubstraten sehr schlechte Ergebnisse erzielt werden. Insbesondere in Verbindung mit einem Microdruckkammersystem zeichnen sich solche Plasmabeschichtungen auf Leichtmetallegierungen besonders gut aus. Vorteilhaft enthält der Stahl neben C noch mindestens eines und vorzugsweise mindestens zwei der folgenden Elemente: Cr, Si, Mo, W, Mn, B.

Das Molybdän, das bei der vorliegenden Erfindung zum Einsatz kommt, kann reines Molybdän oder eine Molybdänlegierung oder -mischung sein. Hierbei kommen solche Legierungen oder Mischungen zum Einsatz, die mehr als 50 Gew.-% Molybdän enthalten, wobei die Legierungs- bzw. Mischungspartner grundsätzlich alle Metalle sein können, die sich mit Molybdän verbinden lassen. Vorteilhaft liegt der Molybdänanteil in den Legierungen bzw. Mischungen bei mindestens 60 Gew.-%. Beispiele für Molybdänlegierungen sind beispielsweise Molybdän-Wolfram oder Molybdän-Eisen, wobei grundsätzlich alle Zusammensetzungsverhältnisse innerhalb der oben angegebenen Grenzen möglich sind.

Das Molybdän und der Stahl werden besonders vorteilhaft als Pulver versprüht. Hierdurch werden bessere Ergebnisse erhalten als mit den ebenfalls bekannten Drahtzuführungen der zu versprühenden Beschichtung.

Die Erfindung läßt sich grundsätzlich auf allen Leichtmetallegierungen ausführen, wobei insbesondere folgende Magnesiumlegierungen besonders geeignet sind:
AlSi₆Cu₄
AZ 91 mit 9 % Al und 1 % Zn,
AS 21 mit 2 % Al und 1 % Si,
AE 42 mit 4 % Al und 2 % Seltene Erden.

Mit der Erfindung lassen sich umweltfreundlich besonders fest Gleitschichten an den Wandungen von Zylinderbohrungen einer Brennkraftmaschine aus einem Leichtmetallmotorblock erstellen. Diese Gleitbeschichtungen lassen sich in einem Beschichtungsschritt auftragen und bedürfen einer nur geringen Nachbehandlung (Honen), wobei insbesondere weder galvanische noch sonstige umweltproblematischen Verfahren zum Einsatz kommen.

Weitere Vorteile der Erfindung ergeben sich aus dem nachfolgend anhand einer Zeichnung näher erläuterten Ausführungsbeispiel.

Es zeigen:
- Figur 1:: den schematischen Aufbau einer Plasmaspritzschicht auf einer Leichtmetallegierung,
- Figur 2:: schematisch ein kommunizierendes System mit eingeschränkter hydrodynamischer Schmierung auf einer Werkstückoberfläche nach dem Stand der Technik, und
- Figur 3:: eine schematische Ansicht ähnlich Figur 2 eines Microdruckkammersystems der Erfindung.

Als metallisches Werkstück 1, auf welchem eine eine hydrodynamische Schmierung gewährleistende Gleitfläche 2 hergestellt werden soll, wird eine Zylinderlaufbahn eines Zylinderkurbelgehäuses einer Brennkraftmaschine angenommen. Dieses Kurbelgehäuse wird aus einem Leichtmetallwerkstoff im Druckgußverfahren hergestellt (hier AlSi₆Cu₄).

Um auf den Zylinderlaufbahnen eine den Betriebsbedingungen entsprechende Schicht aufzubringen, wird auf das Werkstück 1 mittels Plasmaspritzen eine Verschleißschicht 3 aufgebracht.

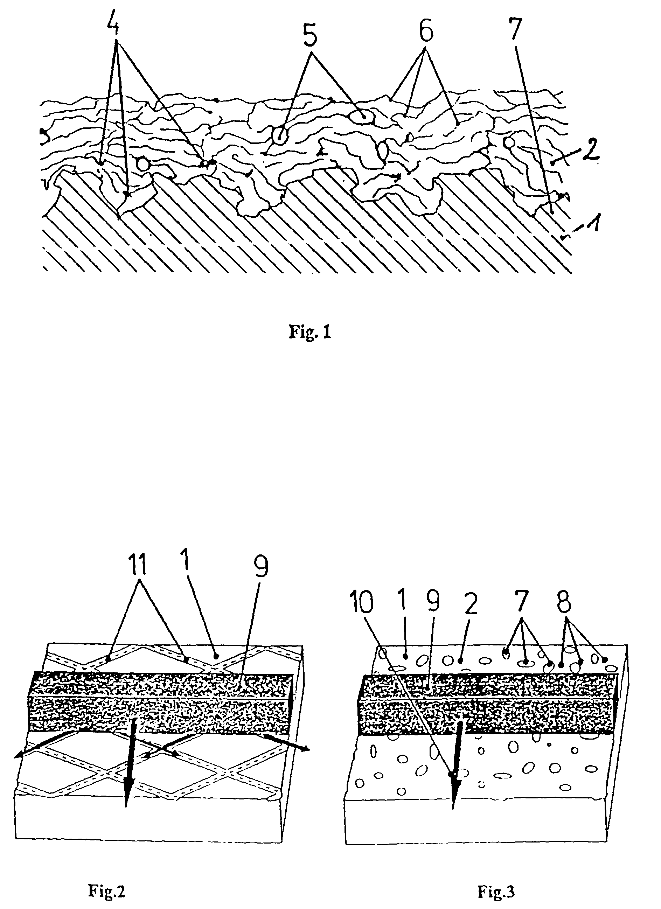

Figur 1 zeigt in starker Vergrößerung und schematisiert einen Querschnitt durch ein Werkstück 1 mit aufgebrachter Verschleißschicht 3. Erkennbar ist die Verschleißschicht 3 durch mechanische Verklammerung am Werkstück 1 gehalten, da die Spritzpartikel der Verschleißschicht im flüssigen Zustand in die Unebenheiten und Hinterschneidungen der Werkstückoberfläche eindringen. An diesen Stellen entstehen beim Erstarren der Verschleißschicht formschlüssige Verbindungen. Zusätzlich bauen sich innerhalb der Verschleißschicht 3 Schrumpfspannungen auf, welche zu kraftflüssigen Verbindungen zwischen Werkstück 1 und Verschleißschicht 3 führen.

In der Verschleißschicht 3 sind sowohl Verunreinigungen 4 wie auch unaufgeschmolzene Spritzpartikel 5 enthalten, während bei 6 vergleichsweise dünne Oxidschichten dargestellt sind.

Die für die Verschleißschicht 3 verwendeten Spritzpulver bestehen aus einem bestimmten Volumenprozentanteil aus einem Molybdänpulver, der Rest wird aus einem Stahlpulver gebildet. Dieses kann beispielsweise aus Eisen, Molybdän, Chrom, Nickel, Silicium und Bor gebildet sein, welches ein insgesamt sehr hartes Stahlpulver ergibt. Alternativ hierzu kann ein legierter Werkzeugstahl, bestehend aus Eisen, Molybdän, Wolfram und Chrom, verwendet werden. Ebenso ist die Verwendung eines niedrig legierten Stahles, beispielsweise auf der Basis von Eisen, Chrom, Mangan und Kohlenstoff, möglich.

Die Verschleißschicht kann aus einem Spritzpulver mit 20 - 60 % Molybdänpulveranteil und einem dementsprechenden Stahlpulveranteil bestehen, besonders gute Ergebnisse wurden mit einem 30 - 50 % Molybdänpulveranteil und dementsprechend 70 - 50 % Stahlpulveranteil aus einem legierten Werkzeugstahl erzielt.

Nach dem Erstarren der Verschleißschicht 3 kann durch eine mechanische Bearbeitung in Form von Honen, wie es beispielsweise aus der genannten DE-44 40 713 A1 bekannt ist, diese Verschleißschicht 3 auf ein gewünschtes Endmaß abgetragen werden. Vorteilhafterweise reißen bei diesem Honvorgang die durch den Abtrag freigelegten Reststücke einzelner erstarrter Metall-Tröpfchen aus der Oberfläche aus, wodurch viele Schmiertaschen 7 in Form von kleinsten Vertiefungen freigelegt werden.

Vorteilhafterweise bildet die Gesamtheit dieser einzelnen Schmiertaschen 7 ein Microdruckkammersystem auf der Gleitfläche 2, welches zwischen diesen Schmiertaschen 7 Plateaus 8 mit äußerst geringer Rauhtiefe aufweist. Weitere Verfahrensschritte, etwa Fluidstrahlen zum Freilegen von durch die mechanische Bearbeitung zugeschmierten Schmiertaschen ist nicht erforderlich.

Figur 3 zeigt einen Ausschnitt aus einer Zylinderlaufbahn eines Werkstückes 1, mit der Gleitfläche 2 und dem durch die Schmiertaschen 7 mit den dazwischen liegenden Plateaus 8 gebildeten Microdruckkammersystem. Schematisch ist ein Kolbenringsegment 9 mit seiner Bewegungsrichtung 10 dargestellt, welches im Betrieb der Brennkraftmaschine relativ zu der Gleitfläche 2 bewegt wird. Das in den Schmiertaschen 7 angesammelte Schmieröl gewährleistet durch das Aufschwimmen des Kolbenringsegmentes 9 eine hydrodynamische Schmierung.

Im Gegensatz dazu zeigt Figur 2 ein offenes, kommunizierendes System nach dem Stand der Technik. Erkennbar sind die durch die Honbearbeitung entstehenden, kreuzenden Riefen 11, in welchen das Schmieröl durch die Bewegung des Kolbenringsegmentes 9 in Richtung der eingezeichneten Pfeile vor diesen Kolbenringen hergeschoben wird. Hierdurch kann nur eingeschränkt ein hydrodynamischer Druck aufgebaut werden und an den Riefenkanten ist eine Mischreibung zwischen Kolbenringen und Zylinderlaufbahnen möglich.

Bei geeigneter Abstimmung der Verfahrensparameter, insbesondere der Zusammensetzung der Verschleißschicht 3 sowie des Honabtrages, ist es durch das erfindungsgemäße Verfahren möglich, mit vergleichsweise wenigen und einfachen Verfahrensschritten ein Microdruckkammersystem zur Gewährleistung einer hydrodynamischen Schmierung zu erzeugen. Insbesondere die Zusammensetzung der aufgespritzten Verschleißschicht hat direkte Auswirkungen auf die entstehende Härte der Gleitfläche; der Honabtrag kann beispielsweise mit steigendem Molybdänpulveranteil gesteigert werden.

Der spezifische Honabtrag, das heißt das Verhältnis aus gemessenem Abtrag beim Fertighonen und dafür benötigter Zeit, war bei allen verwendeten Spritzschichten hoch genug, um innerhalb der vorgegebenen Taktzeiten bei der Fertigung eines Zylinderkurbelgehäuses die Honbearbeitung zu gewährleisten.

Für die Molybdänkomponente kann grundsätzlich ein Molybdän zum Einsatz kommen, wie es in der US 2,588,422 beschrieben ist; d. h. mit bis zu ca. 40 % Legierungsbestandteilen. Vorzugsweise kommt jedoch ein Molybdän mit mindestens 90 Gewichtsprozent Molybdängehalt zum Einsatz und insbesondere ein Molybdän, dessen Beimengungen je Einzelkomponente < 1 % sind, wobei der Molybdängehalt vorzugsweise über 95 % liegt.

## Patentansprüche

1. Verfahren zum Herstellen einer Gleitfläche auf einem Körper durch thermisches Spritzen einer Beschichtung aus Stahl und Molybdän, dadurch gekennzeichnet, daß eine Mischung zur Bildung der die Gleitfläche aufweisenden Beschichtung auf eine Magnesiumlegierung oder Aluminiumlegierung bespritzt wird, und daß die Mischung bei der Magnesiumlegierung
10 bis 70 Gew.-% Molybdän oder Molybdänlegierung mit mehr als 50 Gew.-% Mo
90 bis 30 Gew.-% eines Stahls und
0 bis <50 Gew.-% einer oder mehrerer weiterer Komponenten
und bei der Aluminiumlegierung
20 bis 60 Gew.-% Molybdän oder Molybdänlegierung mit mehr als 50 Gew.-% Mo
80 bis 40 Gew.-% eines Stahls und
0 bis <50 Gew.-% einer oder mehrerer weiterer Komponenten
enthält.

2. Verfahren nach Anspruch 1, dadurch gekennzeichnet, daß eine Mischung enthaltend
30 - 50 Gew.-% Molybdän oder Molybdänlegierung mit mehr als 50 Gew.-% Mo
70 - 50 Gew.-% Stahl und
0 bis <50 Gew.-% einer oder mehrerer weiterer Komponenten
auf die Magnesium- oder Aluminiumlegierung gespritzt wird.

3. Verfahren nach Anspruch 1 oder 2, dadurch gekennzeichnet, daß als Stahlpulver ein legierter Stahl, insbesondere Werkzeugstahl, eingesetzt wird.

4. Verfahren nach Anspruch 3, dadurch gekennzeichnet, daß als Stahlpulver ein Werkzeugstahl aus Eisen, Molybdän, Wolfram, Chrom oder ein niedrig legierter Stahl aus Eisen, Chrom, Mangan und Kohlenstoff eingesetzt wird.

5. Verfahren nach einem der vorhergehenden Ansprüche, dadurch gekennzeichnet, daß eine Zylinderlaufbahn einer Hubkolbenmaschine, insbesondere Verbrennungskraftmaschine, mit der die Gleitfläche aufweisenden Beschichtung versehen wird.

6. Verfahren nach einem der vorhergehenden Ansprüche, dadurch gekennzeichnet, daß die die Gleitfläche aufweisende Beschichtung mittels Plasmaspritzen aufgebracht wird.

7. Verfahren nach einem der vorhergehenden Ansprüche, dadurch gekennzeichnet, daß die Beschichtung zur Bildung der Gleitfläche mechanisch nachbearbeitet wird.

8. Verfahren nach Anspruch 7, dadurch gekennzeichnet, daß bei der Nachbearbeitung geschlossene Poren freigelegt und/oder geschlossene Schichtausbrüche hergestellt werden , die für einen Ölfilm ein Microdruckkammersystem bilden.

9. Verfahren nach einem der vorhergehenden Ansprüche, dadurch gekennzeichnet, daß die Mischung als Pulver aufgebracht wird.

10. Verfahren nach Anspruch 9, dadurch gekennzeichnet, daß die Mischung als Pulver der einzelnen Bestandteile Molybdän und Stahl aufgebracht wird.

11. Hubkolbenmaschine, insbesondere Verbrennungskraftmaschine, mit einem Kurbelgehäuse aus einer Magnesiumlegierung oder Aluminiumlegierung, das Zylinderlaufbahnen aufweist, die mit einer Stahl-Molybdän-Beschichtung versehen sind, die durch thermisches Spritzen einer Mischung enthaltend
10 bis 70 Gew.-% Molybdän oder Molybdänlegierung mit mehr als 50 Gew.-% Mo
90 bis 30 Gew.-% Stahl und
0 bis <50 Gew.-% einer oder mehrerer weiterer Komponenten
bei Magnesiumlegierung und
20 - 60 Gew.-% Molybdän oder Molybdänlegierung mit mehr als 50 Gew.-% Mo
80 - 40 Gew.-% Stahl und
0 bis <50 Gew.-% einer oder mehrerer weiterer Komponenten
bei der Aluminiumlegierung aufgebracht ist.

12. Hubkolbenmaschine nach Anspruch 11, dadurch gekennzeichnet, daß die Mischung als Pulver der einzelnen Bestandteile aufgebracht ist.

13. Verwendung einer Mischung aus
20 - 60 Gew.-% Molybdänpulver oder Molybdänlegierung mit mehr als 50 Gew.-% Mo
80 - 40 Gew.-% Stahlpulver und
0 bis <50 Gew.-% einer oder mehrerer weiterer Komponenten
zum thermischen Spritzen einer eine Gleitfläche bildenden Beschichtung auf einer Aluminiumlegierung.

## Claims

1. Method of producing a slide surface on a body by thermal-spraying a coating of steel and molybdenum, characterised in that a mixture for the purpose of forming the coating, which comprises the slide surface, is sprayed on to a magnesium alloy or aluminium alloy, and that in the case of the magnesium alloy the mixture contains
10 to 70% by weight molybdenum or molybdenum alloy having more than
50% by weight Mo
90 to 30% by weight of a steel and
0 to <50% by weight of one or several further components
and in the case of the aluminium alloy the mixture contains
20 to 60% by weight molybdenum or molybdenum alloy having more than
50% by weight Mo
80 to 40% by weight of a steel and
0 to <50% by weight of one or several further components

2. Method according to claim 1, characterised in that a mixture containing
30 - 50% by weight molybdenum or molybdenum alloy having more than
50% by weight Mo
70 - 50% by weight steel and
0 to <50% by weight of one or several further components
is sprayed on to the magnesium or aluminium alloy.

3. Method according to claim 1 or 2, characterised in that an alloyed steel, in particular tool steel, is used as the steel powder.

4. Method according to claim 3, characterised in that a tool steel consisting of iron, molybdenum, tungsten, chromium or a low-alloyed steel consisting of iron, chromium, manganese and carbon is used as the steel powder.

5. Method according to any one of the preceding claims, characterised in that a cylindrical track of a reciprocating engine, in particular an internal combustion engine, is provided with the coating which comprises the slide surface.

6. Method according to any one of the preceding claims, characterised in that the coating comprising the slide surface is applied by means of a plasma-spraying procedure.

7. Method according to any one of the preceding claims, characterised in that the coating for forming the slide surface is finished in a mechanical manner.

8. Method according to claim 7, characterised in that during the finishing process, closed pores are opened and/or closed layer openings are produced which form a micro-pressure chamber system for an oil film.

9. Method according to any one of the preceding claims, characterised in that the mixture is applied as a powder.

10. Method according to claim 9, characterised in that the mixture is applied as a powder of the individual components molybdenum and steel.

11. Reciprocating engine, in particular an internal combustion engine, having a crank housing consisting of a magnesium alloy or aluminium alloy, which housing comprises cylindrical tracks which are provided with a steel-molybdenum coating which is applied by thermal-spraying a mixture containing
10 to 70% by weight molybdenum or molybdenum alloy having more than
50% by weight Mo
90 to 30% by weight steel and
0 to <50% by weight of one or several further components
in the case of the magnesium alloy and
20 to 60% by weight molybdenum or molybdenum alloy having more than
50% by weight Mo
80 to 40% by weight steel and
0 to <50% by weight of one or several further components
in the case of the aluminium alloy.

12. Reciprocating engine according to claim 11, characterised in that the mixture is applied as a powder of the individual components.

13. Use of a mixture consisting of
20 to 60% by weight molybdenum powder or molybdenum alloy having more than 50% by weight Mo
80 to 40% by weight steel powder and
0 to <50% by weight of one or several further components
for the purpose of thermal-spraying a coating, which forms a slide surface, on an aluminium alloy.

## Revendications

1. Procédé pour réaliser une surface de frottement sur un corps par pulvérisation thermique d'un revêtement formé d'acier et de molybdène, caractérisé en ce qu'on pulvérise sur un alliage de magnésium ou un alliage d'aluminium un mélange destiné à former le revêtement présentant la surface de frottement et en ce que le mélange contient
dans le cas de l'alliage de magnésium
10 à 70 % en poids de molybdène ou d'alliage de molybdène avec plus de 50 % en poids de Mo,
90 à 30 % en poids d'un acier et
0 à moins de 50 % en poids d'un ou plusieurs autres composants,
et dans le cas de l'alliage d'aluminium
20 à 60 % en poids de molybdène ou d'alliage de molybdène avec plus de 50 % en poids de Mo,
80 à 40 % en poids d'un acier et
0 à moins de 50 % en poids d'un ou plusieurs autres composants.

2. Procédé suivant la revendication 1, caractérisé en ce qu'on pulvérise sur l'alliage de magnésium ou d'aluminium un mélange contenant
30 à 50 % en poids de molybdène ou d'alliage de molybdène avec plus de 50 % en poids de Mo,
70 à 50 % en poids d'un acier et
0 à moins de 50 % en poids d'un ou plusieurs autres composants.

3. Procédé suivant la revendication 1 ou 2, caractérisé en ce qu'on utilise comme acier en poudre un acier allié, notamment un acier pour outils.

4. Procédé suivant la revendication 3, caractérisé en ce qu'on utilise comme acier en poudre un acier pour outils constitué de fer, molybdène, tungstène, chrome ou un acier faiblement allié constitué de fer, chrome, manganèse et carbone.

5. Procédé suivant l'une des revendications précédentes, caractérisé en ce qu'une surface de glissement dans le cylindre d'une machine à piston alternatif, notamment d'un moteur à combustion interne, est pourvue du revêtement présentant la surface de frottement.

6. Procédé suivant l'une des revendications précédentes, caractérisé en ce que le revêtement présentant la surface de frottement est appliqué par pulvérisation par plasma.

7. Procédé suivant l'une des revendications précédentes, caractérisé en ce que le revêtement destiné à former la surface de frottement est fini mécaniquement.

8. Procédé suivant la revendication 7, caractérisé en ce que, lors du finissage, des pores fermés sont dégagés et/ou des cavités fermées sont établies dans la couche et forment un système de microchambres de pression pour un film d'huile.

9. Procédé suivant l'une des revendications précédentes, caractérisé en ce que le mélange est appliqué sous forme de poudre.

10. Procédé suivant la revendication 9, caractérisé en ce que le mélange est appliqué sous forme de poudre des constituants individuels molybdène et acier.

11. Machine à piston alternatif, notamment moteur à combustion interne, comprenant un carter de manivelle en un alliage de magnésium ou en un alliage d'aluminium qui présente des surfaces de glissement dans le cylindre qui sont pourvues d'un revêtement d'acier-molybdène qui est appliqué par pulvérisation thermique d'un mélange contenant
10 à 70 % en poids de molybdène ou d'alliage de molybdène avec plus de 50 % en poids de Mo,
90 à 30 % en poids d'un acier et
0 à moins de 50 % en poids d'un ou plusieurs autres composants
dans le cas de l'alliage de magnésium, et
20 à 60 % en poids de molybdène ou d'alliage de molybdène avec plus de 50 % en poids de Mo,
80 à 40 % en poids d'un acier et
0 à moins de 50 % en poids d'un ou plusieurs autres composants
dans le cas de l'alliage d'aluminium.

12. Machine à piston alternatif suivant la revendication 11, caractérisée en ce que le mélange est appliqué sous forme de poudre des constituants individuels.

13. Utilisation d'un mélange de
20 à 60 % en poids de molybdène en poudre ou d'alliage de molybdène avec plus de 50 % en poids de Mo,
80 à 40 % en poids d'acier en poudre et
0 à moins de 50 % en poids d'un ou plusieurs autres composants
pour la pulvérisation thermique d'un revêtement formant une surface de frottement sur un alliage d'aluminium.
